# EUROPEAN PATENT APPLICATION

(11) **EP 2 680 400 A1**
(43) Date of publication of application: **01.01.2014**
(21) Application number: 11859237.7
(22) Date of filing: 21.02.2011
(51) Int. Cl.: H02K 1/18

(54) **UNIT CORE OF ROTATING ELECTRICAL MACHINE**

(71) Applicant: Mitsubishi Electric Corporation, Tokyo 100-8310 (JP)
(72) Inventor: KIMURA, Yasuki, Tokyo 100-8310 (JP); YAMASHIRO, Satoshi, Tokyo 100-8310 (JP); KODERA, Hideaki, Tokyo 100-8310 (JP); AKITA, Hiroyuki, Tokyo 1008310 (JP)
(74) Representative: HOFFMANN EITLE
(86) International application number: PCT/JP2011/053685
(87) International publication number: WO 2012/114428

(57) **Abstract**

Provided is a rotating electrical machine that is manufactured at low cost without the need to produce a new mold for manufacturing rotating electrical machines having different diameters. A unit core (1) of a rotating electrical machine includes a plurality of tooth cores (11) which are connected to one another in a curvable manner. The plurality of tooth cores respectively include core back portions (17) each having a plurality of curvatures.

## Description

### Technical Field

The present invention relates to a unit core of a rotating electrical machine.

### Background Art

As conventional stator core structures of rotating electrical machines including segmented cores, there are known structures disclosed in, for example, Patent Literature 1 (JP 3017085 B) and Patent Literature 2 (JP 3379461 B). In those disclosed technologies, a unit core is taken out of a mold under a state in which a plurality of tooth cores are integrally coupled to one another. Subsequently, under a state in which the plurality of tooth cores are coupled to one another in a linear shape or under a state in which the plurality of tooth cores are warped in an inverted circular arc shape, a wire is wound around each tooth in a concentrated manner. After that, the unit core is deformed into a round shape and then fixed to a frame through shrink fitting.

However, the above-mentioned conventional structure of the unit core has a problem in that, in order to manufacture rotating electrical machines having different core diameters, a new mold needs to be produced, resulting in higher manufacturing cost.

### Citation List

### Patent Literature

[PTL 1] JP 3017085 B
[PTL 2] JP 3379461 B

### Summary of Invention

### Technical Problem

The present invention has been made to solve the above-mentioned problem, and therefore has an object to provide a unit core of a rotating electrical machine, which serves to manufacture rotating electrical machines having different core diameters without producing a new mold.

### Solution to Problem

In order to attain the above-mentioned object, according to the present invention, there is provided a unit core of a rotating electrical machine, the unit core including a plurality of tooth cores which are connected to one another in a curvable manner, in which the plurality of tooth cores respectively include core back portions each having a plurality of curvatures.

### Advantageous Effects of Invention

According to the unit core of the present invention, it is possible to provide the rotating electrical machine that is manufactured at low cost without the need to produce a new mold for manufacturing the rotating electrical machines having different diameters.

### Brief Description of Drawings

[FIG. 1] A view illustrating a tooth core of a rotating electrical machine according to a first embodiment of the present invention.
[FIG. 2] A view illustrating a unit core in which a plurality of tooth cores are coupled to one another.
[FIG. 3] An assembly view of a stator including the tooth cores of FIG. 2.
[FIG. 4] A view illustrating a mold layout for the unit core of FIG. 2.
[FIG. 5] A view illustrating a mode similar to FIG. 1 for a configuration with a smaller diameter according to the first embodiment.
[FIG. 6] A view illustrating a mode similar to FIG. 2 for the configuration with a smaller diameter according to the first embodiment.
[FIG. 7] A view illustrating a mode similar to FIG. 3 for the configuration with a smaller diameter according to the first embodiment.
[FIG. 8] A view illustrating a mode similar to FIG. 4 for the configuration with a smaller diameter according to the first embodiment.
[FIG. 9] A view illustrating the vicinity of a slit portion in the configuration with a smaller diameter according to the first embodiment.
[FIG. 10] A view of a unit core according to a second embodiment of the present invention, for illustrating an arraying pattern in which joining portions between respective tooth cores are oriented in one direction.
[FIG. 11] A view illustrating an arraying pattern in which joining portions between respective tooth cores are oriented in a reverse direction of FIG. 10.
[FIG. 12] A view illustrating the vicinity of a coupling portion between adjacent tooth cores according to the second embodiment.
[FIG. 13] A view illustrating a mode similar to FIG. 10 for a configuration with a smaller diameter according to the second embodiment.
[FIG. 14] A view illustrating a mode similar to FIG. 11 for the configuration with a smaller diameter according to the second embodiment.
[FIG. 15] A view illustrating a mode similar to FIG. 12 for the configuration with a smaller diameter according to the second embodiment.

### Description of Embodiments

In the following, segmented cores of a rotating electrical machine according to embodiments of the present invention are described with reference to the attached drawings. Note that, in the drawings, the same reference symbols represent the same or corresponding parts.

### First Embodiment

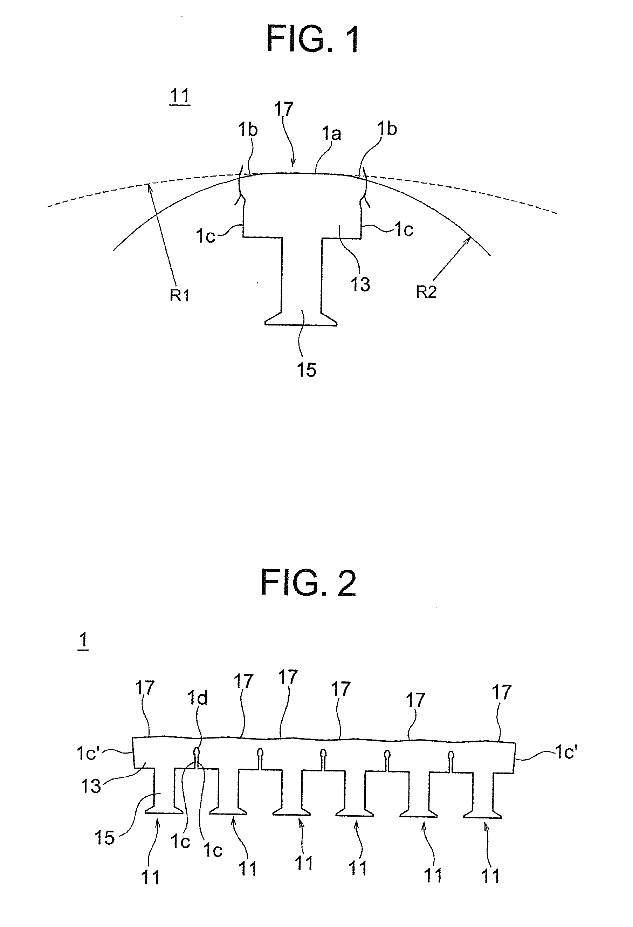

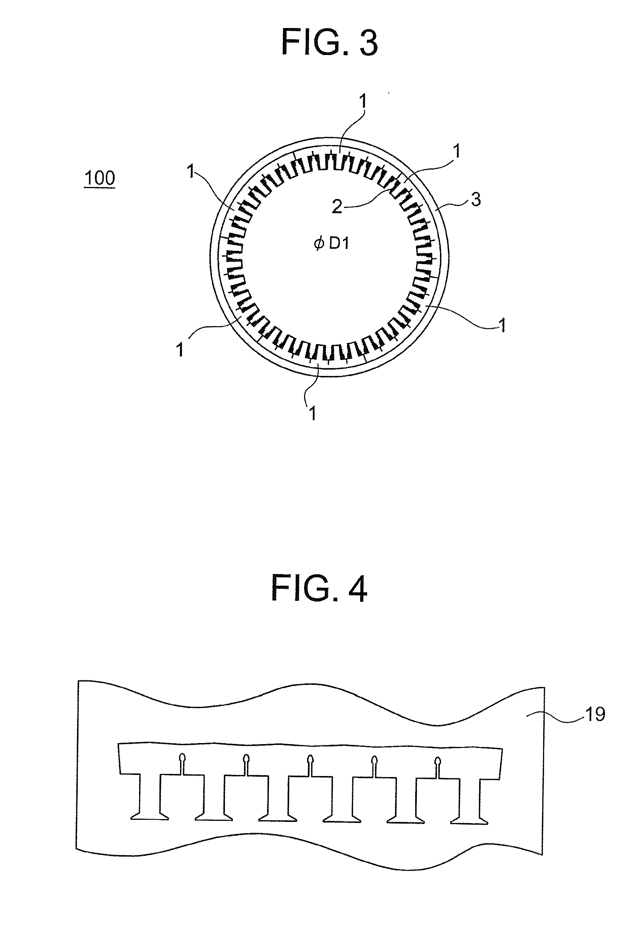

FIG. 1 is a view illustrating a tooth core of a rotating electrical machine according to a first embodiment of the present invention. FIG. 2 is a view illustrating a unit core in which a plurality of tooth cores are coupled to one another. FIG. 3 is an assembly view of a stator including the tooth cores of FIG. 2. A unit core 1 of the rotating electrical machine includes a plurality of tooth cores 11 which are connected to one another in a curvable manner. One or more unit cores 1 form a stator of the rotating electrical machine.

Each of the tooth cores 11 includes a base portion 13 and a tooth portion 15. In this embodiment, all of the plurality of tooth cores 11 forming the unit core 1 are formed into a single piece.

Each tooth portion 15 extends from an inner side of a corresponding base portion 13 in a radial direction of the stator. Each of the tooth cores 11 includes a core back portion 17 situated opposite to the tooth portion 15 with respect to the base portion 13. The core back portion 17 of each of the tooth cores 11 has a plurality of curvatures.

Each core back portion 17 includes one first circular arc portion 1a serving as a first curved portion and a pair of second circular arc portions 1b each serving as a second curved portion. The one first curved portion and each of the pair of second curved portions have different curvatures. The curvature of the second circular arc portion 1b is larger than the curvature of the first circular arc portion 1a. In other words, a curvature radius R1 of the first circular arc portion 1a is larger than a curvature radius R2 of the second circular arc portion 1b.

The first circular arc portion 1a and the second circular arc portions 1b are each curved so as to protrude in a direction opposite to the tooth portion 15, that is, outward in the radial direction of the stator. Further, the pair of second circular arc portions 1b are respectively arranged on both sides of the one first circular arc portion 1a in a divided manner. From a macroscopic point of view, each core back portion 17 including the first circular arc portion 1a and the second circular arc portions 1b is curved as a whole so as to protrude in the direction opposite to the tooth portion 15, and is formed to have lateral symmetry with respect to the tooth portion 15.

The unit core 1 having the above-mentioned configuration is punched through a mold 19 as illustrated in FIG. 4, and is formed by stacking core pieces in an integral state in which the plurality of tooth cores 11 are coupled to one another as illustrated in FIG. 2. Subsequently, under a state in which the unit core 1 maintains a linear shape as illustrated in FIG. 2, a wire 2 is wound around each tooth portion 15. Alternatively, under a state in which the unit core 1 is warped in an inverted circular arc shape so that distal ends of adjacent tooth portions are spaced further apart from each other than in the state illustrated in FIG. 2, the wire 2 is wound around each tooth portion 15. After that, the unit core 1 is deformed into a circular arc shape as illustrated in FIG. 3. Then, the unit core 1 having the circular arc shape is fixed to a frame 3 through shrink fitting, or alternatively, the core back portions of the unit core 1 are welded and fixed to the frame 3 by using a jig. In the shrink fitting, at least one of the circular arc portions of the core back portion abuts against the frame, and in the welding, at least one of the circular arc portions of the core back portion abuts against the jig.

In this embodiment, as illustrated in FIG. 3, six unit cores 1 are connected to one another in an annular shape to form one stator 100. Therefore, six virtual circular arcs each having the curvature radius R1 of the first circular arc portion 1a are joined to form one circle (circle having a diameter D1). Thus, the first circular arc portion 1a is set to have a curvature in accordance therewith.

A surface of the annular frame 3 at the inner diameter D1 abuts against and is fixed to the first circular arc portion 1a having the curvature radius R1. When the unit core 1 is deformed into a circular arc shape, slit portions 1c abut against each other to form a magnetic path between adjacent tooth portions 15. A slit root portion 1d is formed into a circular shape to prevent damage at the time of deformation.

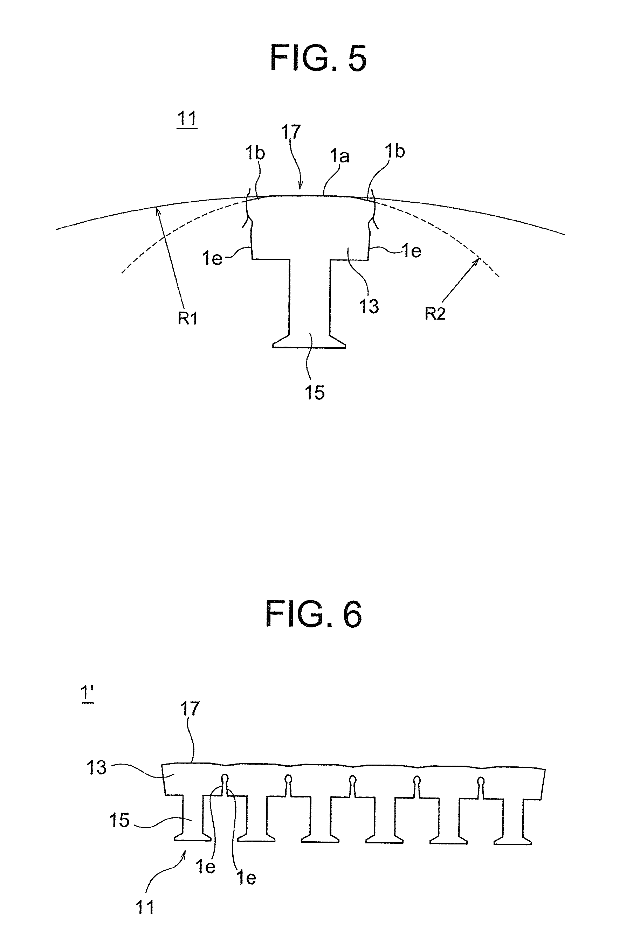

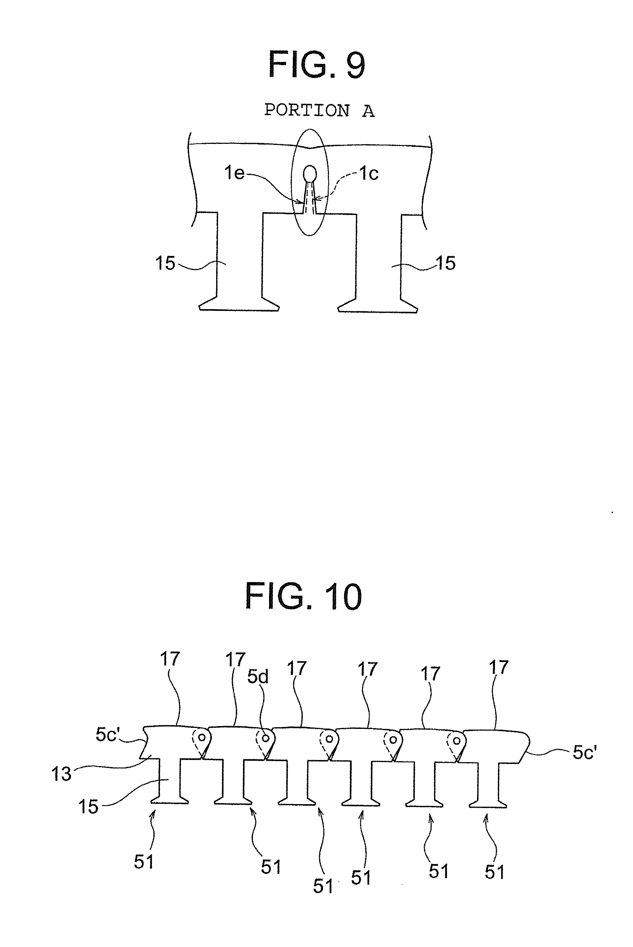

Next, description is made of a configuration of a unit core 1' according to the first embodiment that is directed to a rotating electrical machine including a stator which has a smaller diameter than in the above-mentioned mode illustrated in FIGS. 1 to 4. FIGS. 5, 6, 7, and 8 are views illustrating modes similar to FIGS. 1, 2, 3, and 4, respectively. In addition, FIG. 9 is a view illustrating the vicinity of a slit portion of the above-mentioned unit core for a smaller diameter.

Also in the unit core 1' for a smaller diameter, the core back portion 17 similarly includes the one first circular arc portion 1a having the curvature radius R1 and the two second circular arc portions 1b each having the curvature radius R2. The unit core 1' for a smaller diameter differs from the above-mentioned unit core 1 in that an angular direction along which a slit portion 1e of the unit core 1' extends differs from an angular direction along which the slit portion 1c of the unit core 1 extends. In other words, as illustrated most clearly in FIG. 9, adjacent slit portions 1e are spaced further apart from each other than the adjacent slit portions 1c described above. Similarly, an angular direction along which an abutment end portion 1e of the tooth core 11 at each end of the unit core 1' extends differs from an angular direction along which an abutment end portion 1c' of the unit core 1 extends.

The above-mentioned unit core 1' for a smaller diameter can be manufactured by replacing a die and a punch (not shown) of a mold corresponding to a portion "A" of FIG. 9 so that the slit portion 1c is changed to the slit portion 1e. Further, the abutment end portion 1e' of the unit core 1' can also be obtained by replacing a die and a punch (not shown) of a mold so as to change from the abutment end portion 1c'.

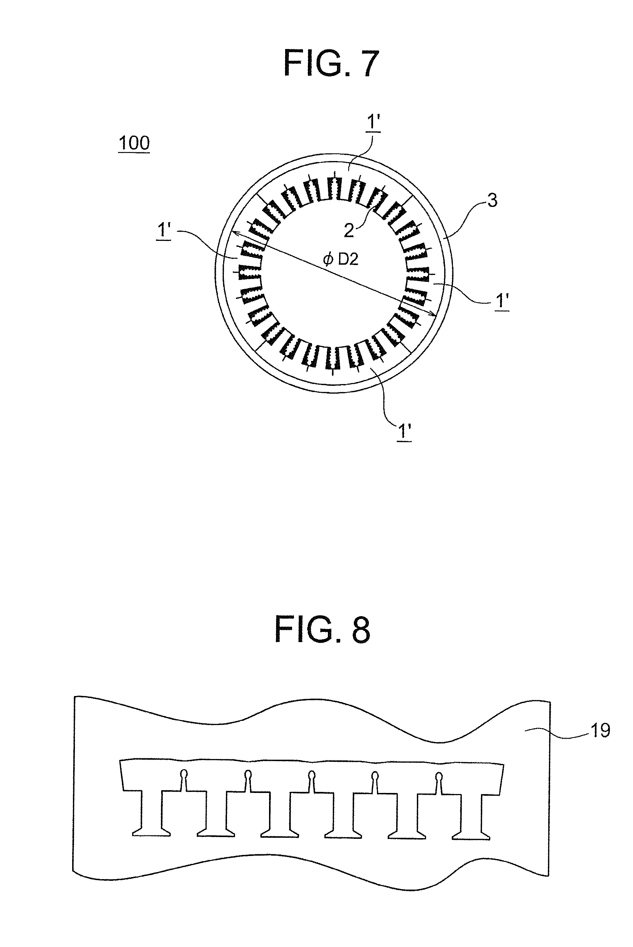

Also in the case of the above-mentioned unit core 1' for a smaller diameter, the stator 100 as illustrated in FIG. 7 can be obtained as a final product through a procedure and a technique similar to those of the unit core 1. However, in the mode illustrated in FIG. 7, four unit cores 1' are connected to one another in an annular shape to form one stator 100, and a surface of the annular frame 3 at an inner diameter D2 (D2<D1) abuts against and is fixed to the second circular arc portion 1b having the curvature radius R2. Therefore, four virtual circular arcs each having the curvature radius R2 of the second circular arc portion 1b are joined to form one circle (circle having the diameter D2). That is, the second circular arc portion 1b is set to have a curvature in accordance therewith.

As described above, according to the unit core of the first embodiment, the core back portion of each of the tooth cores has a plurality of curvatures, and hence, by changing the number of the unit cores to be used to form a circular shape and changing the circular arc portion of the core back portion to be brought into abutment against an inner side of an object to be provided with the unit core, it possible to support core configurations of a plurality of diameters. Thus, rotating electrical machines having different diameters can be supported through only partial change of a mold without producing a new mold, which leads to reduction of mold cost and hence to low-cost manufacture of the rotating electrical machine.

### Second Embodiment

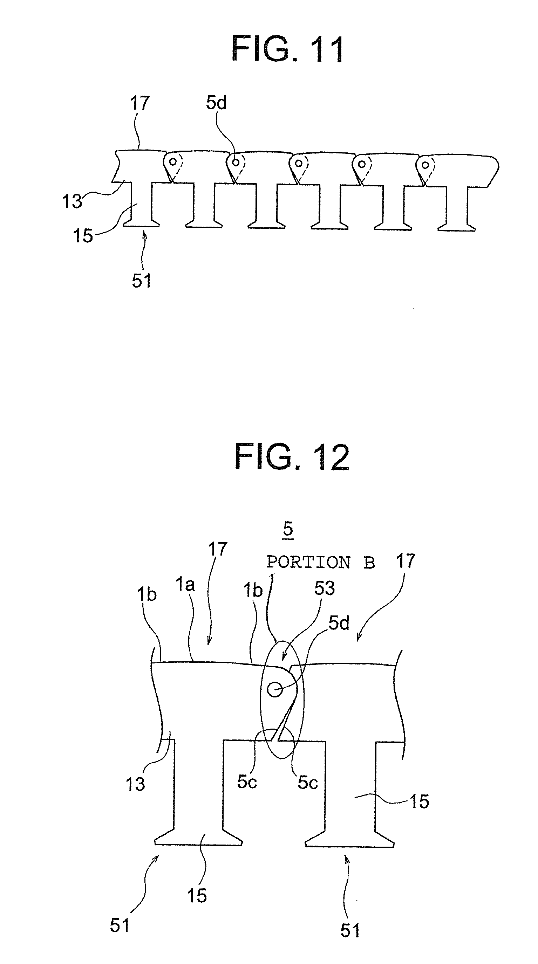

A unit core according to a second embodiment of the present invention differs from that of the first embodiment in that a plurality of tooth cores are coupled to one another through joint portions, respectively, instead of being formed into a single piece. Other parts are the same as in the first embodiment. FIGS. 10 and 11 are each a view illustrating a core piece that forms the unit core according to the second embodiment by stacking one on another. Specifically, FIG. 10 illustrates an arraying pattern in which joining portions between respective tooth cores are oriented in one direction, and FIG. 11 illustrates an arraying pattern in which joining portions between respective tooth cores are oriented in a reverse direction. In addition, FIG. 12 is a view illustrating the vicinity of a coupling portion between adjacent tooth cores.

Also in a unit core 5 according to the second embodiment, the respective core back portion 17 of a tooth core 51 includes the one first circular arc portion 1a having the curvature radius R1 and the two second circular arc portions 1b each having the curvature radius R2. The unit core 5 is obtained by stacking a core piece punched into the pattern illustrated in FIG. 10 through use of a blade and a core piece punched into the pattern illustrated in FIG. 11 through use of a blade so that the respective joining portions of those core pieces are oriented in alternate directions. In the unit core 5 thus formed through the stacking, adjacent tooth cores 51 are connected to each other through a joint portion 53. In other words, the adjacent tooth cores 51 are coupled to each other in a pivotable manner with respect to each other by using a dowel part 5d.

Also in the above-mentioned unit core 5, similarly to the case of the unit core 1, under a state in which the unit core 5 maintains a linear shape, the wire 2 is wound around each tooth portion 15. Alternatively, under a state in which the unit core 5 is warped in an inverted circular arc shape so that distal ends of adjacent tooth portions are spaced further apart from each other, the wire 2 is wound around each tooth portion 15. After that, the unit core 5 is deformed into a circular arc shape. Then, the unit core 1 having the circular arc shape is fixed to the frame 3 through shrink fitting or welding.

Also in the second embodiment, six unit cores 5 are connected to one another in an annular shape to form one stator 100. Therefore, six virtual circular arcs each having the curvature radius R1 of the first circular arc portion 1a are joined to form one circle (circle having the diameter D1). The frame 3 abuts against the first circular arc portion 1a having the curvature radius R1. Moreover, also in the unit core 5, when the unit core 5 is deformed into a circular arc shape, slit portions 5c abut against each other to form a magnetic path between adjacent tooth portions 15.

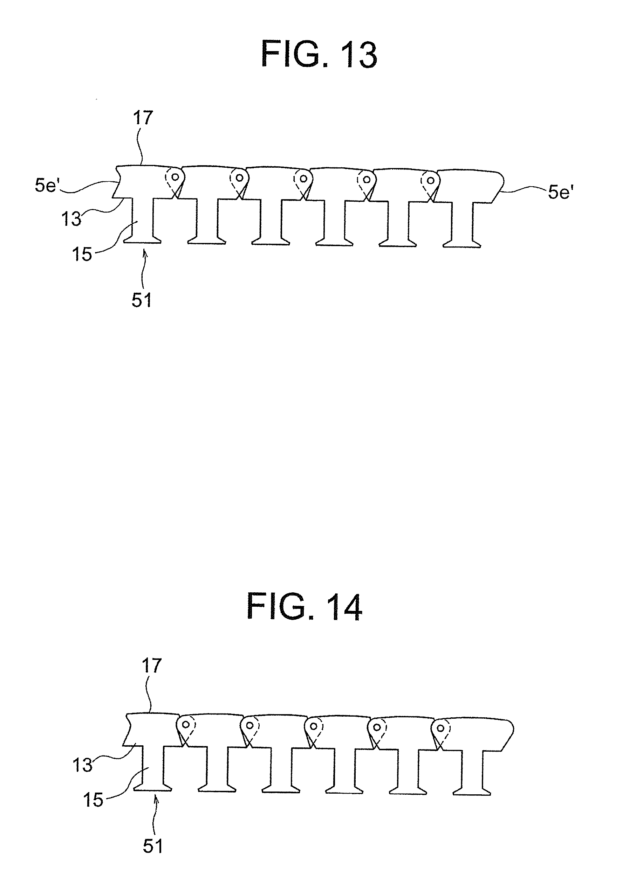

Also in the second embodiment, description is made of a configuration of a unit core 5' that is directed to a rotating electrical machine including a stator which has a smaller diameter than in the above-mentioned mode illustrated in FIGS. 10 to 12. FIGS. 13 to 15 are views illustrating modes similar to FIGS. 10 to 12, respectively.

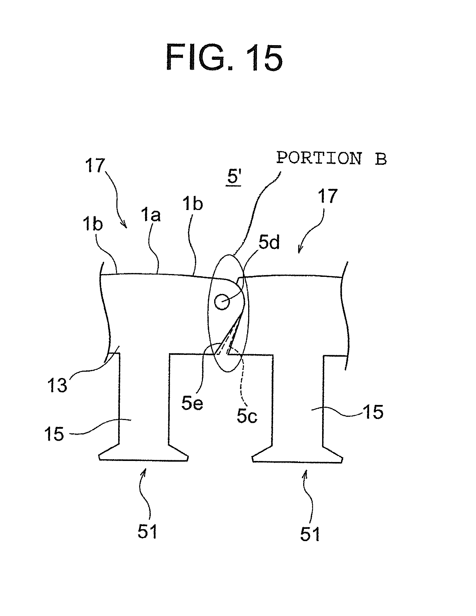

In the unit core 5' for a smaller diameter, as illustrated in FIG. 15, an angular direction along which a slit portion 5e of the unit core 5' extends differs from an angular direction along which the slit portion 5c of the unit core 5 extends. That is, adjacent slit portions 5e are spaced further apart from each other than the adjacent slit portions 5c described above. Similarly, an angular direction along which an abutment end portion 5e' of the tooth core 51 at each end of the unit core 5' extends differs from an angular direction along which an abutment end portion 5c' of the unit core 5 extends.

The above-mentioned unit core 5' for a smaller diameter can be manufactured by replacing a die and a punch (not shown) of a mold corresponding to a portion "B" of FIG. 15 so that the slit portion 5c is changed to the slit portion 5e. Further, the abutment end portion 5e' of the unit core 5' can also be obtained by replacing a die and a punch (not shown) of a mold so as to change from the abutment end portion 5c'.

Also in the case of the above-mentioned unit core 5' for a smaller diameter, four unit cores 5' are connected to one another in an annular shape to form one stator 100, and four virtual circular arcs each having the curvature radius R2 of the second circular arc portion 1b are joined to form one circle (circle having the diameter D2). The annular frame 3 abuts against the second circular arc portion 1b having the curvature radius R2.

As described above, according to the unit core of the second embodiment as well, the core back portion of each of the tooth cores has a plurality of curvatures, and hence, by changing the number of the unit cores to be used to form a circular shape and changing the circular arc portion of the core back portion to be brought into abutment against an inner side of an object to be provided with the unit core, it possible to support core configurations of a plurality of diameters. Thus, rotating electrical machines having different diameters can be supported through only partial change of a mold without producing a new mold.

Details of the present invention have been described above with reference to the preferred embodiments. It is understood that a person skilled in the art may adopt various modified modes based on the basic technical ideas and teachings of the present invention.

In the above-mentioned embodiments, each core back portion includes only one first curved portion and two second curved portions, but the present invention is not limited thereto. Thus, it is only required that each core back portion include at least one first curved portion and at least one second curved portion. Each core back portion may have three or more curvatures so that rotating electrical machines having three or more diameters can be manufactured at low cost. In addition, the number and position of each of the first curved portion and the second curved portion may be changed as appropriate.

In the above-mentioned embodiments, a mold layout in which the six tooth cores are integrally coupled to one another has been described. However, the present invention may also be implemented by using a mold layout having the number of tooth cores other than six that are coupled to one another. For example, the present invention may also be applied to a mold in which 9, 12, or other numbers of tooth cores are coupled to one another.

Further, in the above-mentioned embodiments, a plurality of unit cores that are each curved in a circular arc shape are connected to one another to form the stator. However, the present invention is not limited thereto and also includes a mode in which a single unit core including all necessary tooth cores is curved in an annular shape to form a stator.

### Reference Signs List

1, 1', 5, 5' unit core, 1a first circular arc portion, 1b first circular arc portion, 1c, 5c slit portion, 1c', 5c' abutment end portion, 1d slit root portion, 1e, 5e slit portion, 1e', 5e' abutment end portion, 2 wire, 3 frame, 11, 51 tooth core, 100 stator.

## Claims

1. A unit core of a rotating electrical machine, the unit core comprising a plurality of tooth cores which are connected to one another in a curvable manner,
wherein the plurality of tooth cores respectively comprise core back portions each having a plurality of curvatures.

2. A unit core of a rotating electrical machine according to claim 1, wherein:
the plurality of tooth cores each comprise a base portion and a tooth portion;
each of the core back portions is situated opposite to the tooth portion with respect to the base portion;
the each of the core back portions comprises at least one first curved portion and at least one second curved portion;
the at least one first curved portion and the at least one second curved portion have different curvatures; and
the at least one first curved portion and the at least one second curved portion each protrude in a direction opposite to the tooth portion.

3. A unit core of a rotating electrical machine according to claim 2, wherein:
the at least one first curved portion is one first curvedportion, and the at least one second curved portion comprises a pair of second curved portions;
a curvature of each of the pair of second curved portions is larger than a curvature of the one first curved portion; and
the pair of second curved portions are respectively arranged on both sides of the one first curved portion in a divided manner.

4. A unit core of a rotating electrical machine according to any one of claims 1 to 3, wherein the plurality of tooth cores are formed into a single piece.

5. A unit core of a rotating electrical machine according to any one of claims 1 to 3, wherein the plurality of tooth cores are connected to each other through a joint portion.
